# EUROPEAN PATENT APPLICATION

(11) **EP 1 129 995 A2**
(43) Date of publication of application: **05.09.2001**
(21) Application number: 01850032.2
(22) Date of filing: 13.02.2001
(51) Int. Cl.: C02F 1/52

(54) **A method and a device for treatment of liquids**

(30) Priority: 01.03.2000 SE 0000666
(71) Applicant: ITT MANUFACTURING ENTERPRISES, INC., Wilmington, Delaware 19801 (US)
(72) Inventor: Held, Henrik, 172 74 Sundbyberg (SE); Strandberg, Tore, 125 35 Alvsjö (SE)
(74) Representative: Larsson, Sten

(57) **Abstract**

The invention concerns a method and a device for chemical treatment of liquids, such as drinking water, sewage water, industrial process water etc.

According to the invention the treatment is taking place in one single elongated tank (1) where a mixer (10) is arranged close one of the end walls (4). A flocculating agent is fed within the area of the mixer (10) where the mixing is intense. The mixing intensity decreases successively downstream of the mixer and flock growths start. At the far end (5) of the tank (1) the influence from the mixer has ceased and the flocks sediment.

## Description

The invention concerns a method and a device for treatment of liquids such as drinking water, sewage water, industrial process water etc. In the specification below, the treatment of municipal sewage water will be dealt with.

The treatment of sewage water is normally performed in three steps. Step one is a mechanical treatment, where heavy solids are filtered. Step two is a biological treatment and step three a chemical treatment. In said last step, chemicals are added to the sewage water, which cause flocculation, meaning that pollutants are collected in lumps which sink to the bottom and a relatively clean aqueous phase can be diverted from the water tank.

The chemical treatment is often divided into several steps in several tanks or chambers. In a first tank chemicals are added during an intensive, swift mixing by help of one or several mixers arranged within the tank. In a second tank the flocculation starts, the flocks being kept in suspension by help of other mixers. In the following tank or tanks the volumes of the flocks are successively increased. In order not to disturb the flocculation, their suspension being taken care of by slowly rotating mixers. In the final tank, there is no mixing and the flocks sink to the bottom to be collected by help of special means, while clean water is diverted from the upper part of the tank.

The reason for using several treatment tanks with successively decreasing mixing intensity, is that the growths of the flocks are believed to be maximized in this way. One disadvantage is however, that the costs for tanks and mixers are considerable. In addition, the flocculation started in one tank is being interrupted when the water enters next tank. This may cause decomposition of the flocks and making the aqueous phase muddy.

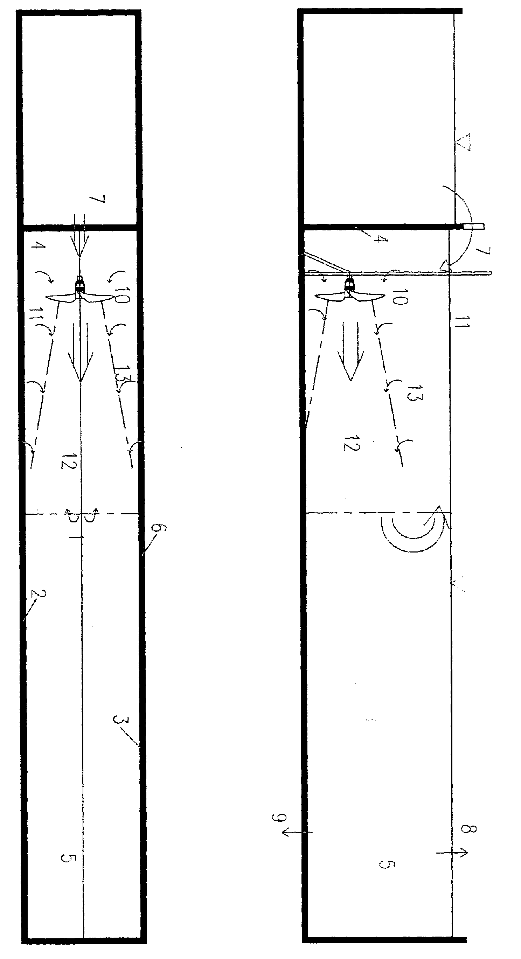

The purpose of subject invention is therefore to obtain a method and a device for a rational treatment of sewage water, where a minimum of tanks and mixers are necessary and where the growths of the flocks and the sedimentation are not interrupted during the process. The invention is disclosed more closely below with reference to drawings of which Fig 1 shows a preferred embodiment seen from above and Fig 2 the same embodiment seen from one side.

In the drawings 1 stands for a tank having side walls 2 and 3, end walls 4 and 5 and a bottom 6. 7 stands for an inlet, 8 an outlet for clean water and 9 an outlet for sediment. 10 stands for a mixer, 11 feeding means for a flocculating agent, while 12 and 13 stand for flow arrows.

According to the invention the entire process for treatment of the sewage water takes place in one single tank, the latter having a length which exceeds twice its width, alternatively its depth. Water is fed through the inlet 7. The water may then be entirely untreated or alternatively already being fed with flocculation agent in a pre tank not shown.

A mixer 10 is arranged within the tank 1, said mixer having a relatively large cross section area as compared with that of the tank 1. According to e preferred embodiment, the mixer is rotating slowly. The mixer is located close to the inlet at one of the end walls 4 and so arranged, that a current is created which is directed towards the opposite end wall 5. If the incoming water is untreated, a flocculating agent is added adjacent the mixer.

The mixer 10 creates a flow in and a mixing of the water within the tank according to a pattern shown in Figs 1 and 2. The forward directed flow is indicated by the arrows 12. As the flow far exceeds the amount of incoming water through the inlet 7, a backward flow towards the mixer will occur along the periphery. A part of said backward flow, shown by the arrows 13, obtains an intensive mixing within the area of the mixer causing an effective admixture of the flocculating agent.

The flow pattern created is, as can be seen in Figs 1 and 2, diverging in the direction away from the mixer 10. The cross section area thus increases and thereby the amount of water that takes part in the mixing process also increases. This means that the part of the total water volume that comes from the back flowing water decreases further away from the mixer. The mixing intensity then goes down and the growths of the flocks are stimulated. The flow is however kept at such a level, that there is no particular sedimentation.

The pattern described above with a continuously decreasing flow intensity in the tank is valid up to a point about 2.5 times the width or the depth of the tank away from the mixer, depending on which measure is the largest. Beyond that point, the effect decreases drastically and a quick sedimentation of the flocks takes place. The flocks are taken away through the outlet 9 and the clean water through the outlet 8.

As previously mentioned, the tank must be elongated and have a length that exceeds 2.5 times the width or depth of the tank. The cross section may be rectangular or circular.

By help of the method and the device according to the invention it is possible to obtain an effective and less expensive way to chemically treat polluted water. In the description sewage water has been mentioned, but also other types of liquids are possible to treat according to the invention. In the description and in the drawings an embodiment has been shown where the flocculating agent is added to the area close to the mixer. It is however also possible to add the flocculating agent in a pre-chamber where a separate mixer is arranged for the admixture. Essential is however, that the flocking starts in the main tank so that there is no interruption of the growth between the tanks.

## Claims

1. A method to obtain chemical treatment of liquids such as drinking water, sewage water, industrial process water etc, where chemicals are being added to the liquid for creating flocks containing pollutants, which flocks and the end of the process sediment and are brought away, while clean water is separated from a higher level,
characterized in,
that mixing of the liquid is carried out in an elongated tank (1) by help of a mixer (10) located close to one of the ends (4) of said tank, the mixer creating a flow directed towards the opposite end (5) of the tank,
that return flows (13) occur along the side walls (2), (3) of the tank and/or the bottom (6) and/or the surface,
that a flocculating agent is added in a separate pre-chamber or within the area of the mixer (10) where an intensive mixing takes place,
that the growths of the flocks take place successively downstream of the mixer (10),
that the mixing intensity gradually decreases downstream and finally stop entirely after a distance of at least twice the depth or width of the tank, depending on which measure is the largest.

2. A device for carrying out the method according to claim 1, characterized in, that it comprises,
an elongated tank (1), the length of which is at least twice the width, alternatively the depth, of the tank,
a mixer (10) arranged close to one of the end walls (4) of the tank and directed towards the opposite end wall (5) of the tank,
one or several means for addition of flocculating agent within the area of the mixer (10) or in a pre-chamber
and means (8) and (9) for diversion of water and sediment respectively.

3. A device according to claim 2, characterized in,
that the tank (1) has a square cross section as seen in the direction of the flow.

4. A device according to claim 2, characterized in,
that the tank has a rectangular cross section as seen in the direction of the flow.

5. A device according to claim 2, characterized in,
that the tank has a circular cross section as seen in the direction of the flow.
